Europäisches Patentamt

European Patent Office

Office européen des brevets

(11) Publication number: **0 076 681**
**B1**

## (12) EUROPEAN PATENT SPECIFICATION

(45) Date of publication of patent specification: **05.03.86**

(21) Application number: **82305261.8**

(22) Date of filing: **04.10.82**

(51) Int. Cl.⁴: **B 23 K 1/12,** B 23 K 3/00,
B 23 K 35/36, G 01 K 11/12,
H 01 R 4/70

(54) Soldering device and method.

(30) Priority: **05.10.81 US 308867**

(43) Date of publication of application:
**13.04.83 Bulletin 83/15**

(45) Publication of the grant of the patent:
**05.03.86 Bulletin 86/10**

(84) Designated Contracting States:
**AT BE CH DE FR IT LI NL SE**

(56) References cited:
**DE-A-2 809 461**
**JP-A-53 015 243**
**US-A-3 305 625**
**US-A-3 396 894**
**US-A-3 451 609**
**US-A-4 228 761**

(73) Proprietor: **RAYCHEM CORPORATION**
**300 Constitution Drive**
**Menlo Park California 94025 (US)**

(72) Inventor: **Cydzik, Edward Antoni**
**3601 Pasadena Drive**
**San Mateo California 94403 (US)**
Inventor: **Gen, Tamar G.**
**567 Lincoln Avenue**
**Palo Alto California 94301 (US)**

(74) Representative: **Dlugosz, Anthony Charles et al**
**Raychem Limited Intellectual Property Law**
**Department Faraday Road**
**Dorcan Swindon Wiltshire (GB)**

Courier Press, Leamington Spa, England.

## Description

This invention relates to a heat-recoverable soldering device, to methods of soldering using such a device and to the use of such compositions in soldering.

Heat-recoverable soldering devices are known in the art. See, for example, U.S. Patents Nos. 3,239,125 to Sherlock, 3,305,625 to Ellis, 3,316,343 to Sherlock. 3,396,460 to Wetmore and 3,396,894 to Ellis. Such heat-recoverable devices generally comprise a heat-shrinkable polymeric sleeve haing a fusible insert comprising solder. Elongate substrates, such as a pair of wires, are inserted into the sleeve and heat is applied causing the sleeve to shrink into contact with the substrates. The heat also causes the solder to melt and flow around the substrates. Upon cooling, a solid solder joint is formed between the substrates. In general, the temperature required to melt the solder is higher than the temperature required to shrink the sleeve. Thus, visual observation that the sleeve has completely recovered does not necessarily mean that the temperature necessary for soldering has been reached. There is, therefore, no visible indication during the soldering process that enough heat has been applied. Further, in the event that a soldered joint so formed fails during use, there is no way of subsequently inspecting the joint to determine whether the failure was due to inadequate heating during the soldering process.

US Patent No. 3,451,609 describes a heat-shrinkable soldering device wherein the heat-shrinkable plastic tube of the device is provided with a heat-sensitive pigmented paint applied as a coating to the interior surface of the plastic tube. Alternatively, the heat-sensitive pigment-containing paint can be incorporated throughout the body of the plastic tube. When the device is heated the paint changes from one colour to another colour.

Another method of soldering metal pipes together is disclosed in Japanese Patent Kokai No. 53—15243. Here the pipes to be soldered are butted together and solder is wrapped around the butt area. A heat-shrinkable sleeve, the inner surface of which is coated with thermochromic material, is positioned over this butt area and is heated. The heat causes the thermochromic material to change colour at the melting temperature of the solder.

A first aspect of this invention provides a soldering device comprising a substantially transparent heat-recoverable polymeric member, a fusible solder insert positioned within said member and a solder flux composition which is associated with said solder insert characterised in that the flux composition undergoes a visible colour change at a critical temperature.

The polymeric member is substantially transparent to the extent that the visible colour change of the solder flux can be seen through the member. This device thus advantageously provides a clear visible indication that a solder joint or connection has reached the correct soldering temperature.

A second aspect of this invention provides a method of soldering at least two solderable substrates which comprises positioning said substrates within a heat-recoverable soldering device according to the first aspect of the present invention, and heating said device, thereby causing said heat-recoverable member to recover into contact with said substrates and causing the solder to melt and flow and solder the substrates together, characterised in that heating the recoverable member also causes said flux to undergo a visible colour change. Preferably the device is arranged such that the heating step causes the heat-recoverable member to recover into contact with the substrates before the flux undergoes a visible colour change. Preferably the substrates are generally elongate.

Preferably the solder flux composition comprises solder flux and a reactive component, the flux composition undergoing a chemical reaction resulting in a visible colour change at a critical temperature.

The heat-recoverable member of the device of the present invention is capable of undergoing a change in its dimensional configuration on application of heat. This change in dimensional configuration is usually toward an original shape from which it has previously been deformed, but the term "Heat-recoverable", as used herein, also includes a member which, on heating, adopts a new configuration, even it it has not been previously deformed.

The heat-recoverable member of the device according to said first aspect of the present invention generally comprises a heat-shrinkable sleeve made from a polymeric material exhibiting the property of elastic or plastic memory as described, for example, in U.S. Patents Nos. 2,027,962 and 3,086,242. The original dimensionally heat-stable form may be a transient form in a continous process in which, for example, an extruded tube is expanded, while hot, to a dimensionally heat-unstable form but, in other methods of preparation, a preformed dimensionally heat-stable article is deformed to a dimensionally heat unstable form in a separate stage.

In the production of the heat-recoverable member, the polymeric material is generally cross-linked. One manner of producing a heat-recoverable article comprises shaping the polymeric material into the desired heat-stable form, subsequently cross-linking the polymeric material, heating the article to a temperature above the crystalline melting point, or for amorphous materials the softening point, of the polymer, deforming the article and cooling the article while in the deformed state so that the deformed state of the article is retained. In use, application of heat will cause the article to dimensionally recover from the deformed state to the original heat-stable shape.

In other articles, as described, for example, in U.S. Patent No. 4,207,364, an elastomeric member such as an outer tubular member is held in a stretched state by a second member, such as an inner tubular member, which, upon heating weakens and thus allows the elastomeric member to recover.

Examples of polymers used in the manufacture of heat-recoverable articles include polyolefins, e.g. polyethylene and copolymers of ethylene with ethylenically unsaturated monomers, such as ethylene/ethyl arcylate, ethylene/vinyl acetate copolymers, polyvinyl chloride, elastomers, silicones, polytetrafluoroethylene, polyvinylidene fluoride, polyurethanes, and ionomers. The polymer can be cross-linked either by radiation or chemical means.

The heat-recovery temperature of crystalline polymers is generally a temperature slightly above the crystalline melting temperature. Polymers, such as polyvinyl chloride, which are not crystalline recover at about their glass transition temperature.

The wall thickness of the member is preferably in the range of from about 0.0005 inch (0.0127mm) to about 0.05 inch (1.2700mm) and is especially preferably from about 0.0008 inch (0.0203mm) to about 0.01 inch (0.2540mm).

The solder insert may be positioned within the heat-recoverable member by coating solder onto the surface of the recoverable member. Alternatively, a solder perform of the desired configuration may be produced and this then inserted into the heat-recoverable member. The solder is positioned such that when two solderable substrates are positioned within the device and the device is heated, the solder is forced into intimate contact with the substrates by the recovery of the heat-recoverable member. When the heat-recoverable member is in the form of a heat-shrinkable sleeve, the solder is preferably in the shape of a ring on the inner surface of the sleeve.

The flux aids the flow of the solder or cleans the surfaces of the substrates to be joined or both. Various solder flux compositions are known and are commercially available. Widely used as solder fluxes are composition based on natural rosin. Other fluxes include, for example, inorganic and organic acids. In use, the solder flux melts, flows and covers the substrate surface at a temperature below the melting point of the solder. Thus the particular flux used will depend of the nature of the solder in a given application. Any solder flux can be used in accordance with this invention. The flux comprises a temperature indicating component and the particular flux and the appropriate temperature indicating component to be used in a particular application can be readily ascertained by one skilled in the art without undue experimentation. The temperature indicating component is preferably one that is compatible with the flux and does not interfere with the normal functioning of the flux.

The solder flux is associated with the solder of the heat-recoverable soldering device. Any of the conventional means for associating flux with solder can be used. For example, a solder preform can be coated with flux by spraying, dipping, brushing or the like, usually before it has been positioned within the heat-recoverable device. The solder flux can also be used in soldering operations such as hand soldering, in which a heat-recoverable device is not employed. In this event, the flux can be coated on the solder or can be positioned within the solder, for example, in the form of a core which can be in various configurations as is well known in the art. The flux must be visible during the soldering process to detect the colour change in the flux when it reaches the appropriate temperature. It has been found that if the flux is positioned as a core within the solder, flow of the flux on heating renders it visible. A visible colour change occurs when the soldering temperature has been reached. In general, the soldering temperature is higher than the recovery temperature. Thus continued heating is required after recovery in order to effect the visible colour change of the solder flux.

In accordance with this invention, the solder flux composition contains a temperature indicator such that the flux undergoes a colour change when heated to the appropriate soldering temperature. The colour change is preferably an irreversible colour change, that is a colour change that does not reverse, for example, when the solder and flux cool and solidify. Such an irreversible change provides a continuing indication and permanent means for determining whether the soldered joint was heated to the required temperature during soldering. Thus improperly formed terminations can be detected by visual inspection after the soldered connection is completed and cooled.

The colour change of the flux is preferably from a coloured state to a substantially colourless one. The completed solder joint is thus visible for inspection through the flux. In this way, the joint itself can be inspected to check for adequate soldering and to detect improperly formed terminations, as well as to check for application of sufficient heat during the soldering process by the change in colour of the flux.

The flux composition changes colour at a critical temperature. The desired critical temperature varies depending on the particular solder used. The critical temperature is that temperature which is required to effect a solder connection with the particular solder, that is the temperature required to cause the solder to melt, flow and wet the substrates so that on cooling the solder makes a mechanical and electrical bond between the substrates being soldered. The particular solder to be used varies depending on the substrates being joined and the material of the heat-recoverable member. The temperature required to effect the solder termination is generally above the temperature required to cause recovery of the heat-recoverable member.

Since the critical temperature varies with the nature of the solder, the temperature indicating component of the flux composition varies depending on the solder used. Preferably, the flux composition undergoes a colour change in the temperature range of from about 150°C to about 450°C, especially preferably from about 200°C to about 240°C. The temperature of the colour change is preferably in the range of from about 20°C to about 60°C above the melting point of the solder. Preferably, it is about 20°C to about 30°C above the melting point of a low temperature solder and about 30°C to about 60°C above the melting point of a high temperature solder.

As stated above, the flux composition contains a temperature indicator such that at a critical temperature the flux composition undergoes a colour change. Various temperature indicators can be used, for example, azo dyes such as Pigment Red 73 (an azo dye prepared from 2-nitro-p-toluidine and 2-napthol, CI 12120, acid-base indicators such as Thymol blue, diazo dyes such as Acid Red 73 (a diazo dye derived from p-phenylazoaniline and 2-naphthol-6,8-disulfonic acid, CI 27290), and the like. In general, any dye which is compatible with the flux and which undergoes a colour change at a critial temperature can be used.

Preferably the flux composition contains a temperature indicator that is a chemically reactive component which undergoes a chemical reaction with the solder flux at a critical temperature to produce a colour change. Particularly preferred are flux compositions in which, at a critical temperature, the reactive component causes the flux composition to become colourless since this allows the soldered joint to be readily inspected. Suitable chemically reactive components are, for example, Bromocresol Green Basic Fuchsine or Thymol Blue. .

The temperature indicator may be incorporated into a solder flux composition by known techniques. The amount of temperature indicator incorporated into the flux is preferably in the range of from about 0.01 to about 5 parts per 100 parts of flux and is especially preferably from about 0.05 to about 2 parts per 100 parts of flux. The amount added depends on the intensity of colour. Sufficient temperature indicator should be added to provide a flux composition which is clearly visible during the soldering operation. The flux composition may also contain additives, for example, dispersing aids such as water, alcohol or a surfactant or emulsifier, buffers, such as an acid or salt to maintain the desired pH, for example, oxalic acid, lactic acid, maleic acid, tartaric acid, fumaric acid or citric acid, and stabilizers.

An embodiment of a device in accordance with the present invention will now be described by way of example, with reference to the accompanying drawings, wherein:

Figure 1 is a side view of a heat-recoverable device according to the present invention having two elongate substrates positioned therein;

Figure 2 is a side view of the device of Figure 1 after a solder joint has been effected between the elongate substrates.

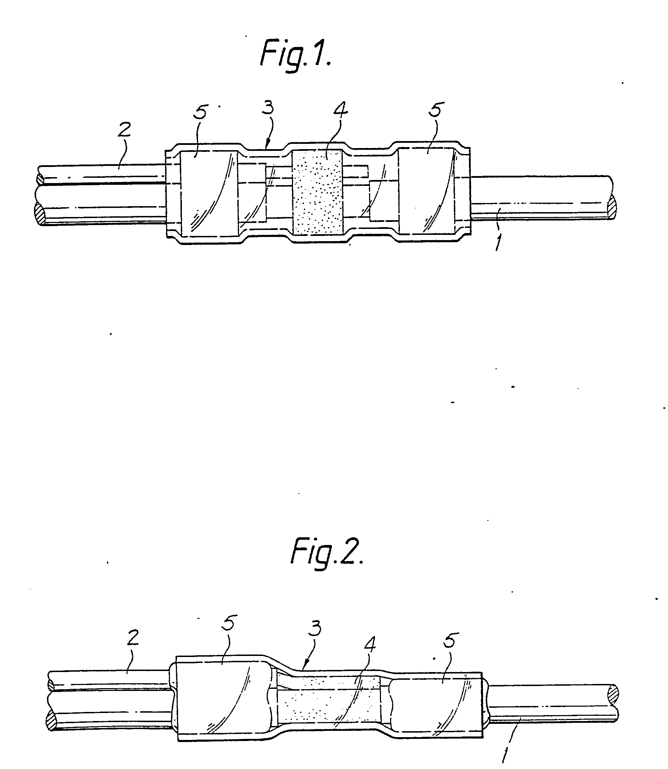

In Figure 1, a heat-recoverable device comprises a heat-recoverable member in the form of a tubular sleeve 3 having a solder insert 4. The sleeve 3 is a heat-shrinkable tube of radiation cross-linked ethylene-tetrafluoroethylene copolymer containing fusible thermoplastic inserts 5 toward each end of the tube. Prior to being positioned within the sleeve 3 the solder insert 4 is coated with a temperature indicating flux. The coated flux is dark blue in colour and thus obscures the grey colour of the solder insert.

The unrecovered sleeve 3 is positioned over a coaxial cable 1 having a portion of the outer insulation removed to expose the underlying shield. The end region of a ground wire 2 with the insulation being removed from the end region lies adjacent the exposed shield of the cable 1. The sleeve 3 is then heated causing it to shrink into contact with the cable and ground wire and to cause the solder to melt and flow. On heating, the flux changes colour at a temperature above the melting point of the solder becoming colourless. Heating is discontinued at this point. During heating of the sleeve, the thermoplastic inserts 5 melt and seal the sleeve to the cable. The resulting product is shown in Figure 2.

In Figure 2, sleeve 3 has shrunk into contact with and is sealed to the cable 1. As the flux is now colourless, the grey colour of the solder, 4, is visible through the sleeve. The solder has thus affected a termination between the shield of 1 and the exposed tip of ground wire, 2.

The following Examples illustrate various solder flux compositions in accordance with the present invention.

Examples 1—14

Temperature indicating solder flux compositions were prepared by dispersing various dyes in a Milros #611, a commercially available rosin-based flux comprising 37% of a mixture of rosin isomers in 63% isopropyl alcohol. The dyes used and the concentrations of dye in the resulting temperature indicating flux compositions are listed in Table 1. Additives, as listed in Table 1, were added as appropriate to aid in dissolution of the pigment or to buffer the solution to maintain the desired pH. The dyes used are:

Acid Red 73 (commercially available as Scarlet M Crude), a diazo dye derived from p-phenylazoniline and 2-naphthol-6,8-disulphonic acid. (Colour Index, CI, 27290).

Pigment Red 3 (commercially available as Atlasol Spirit Red-3) an azo dye prepared from 2-nitro-p-toluidine and 2-naphthol. (CI 12120).

Thymol Blue, commercially available and also referred to as thymolsulphonphthalien.

Pigment Red 52 (commercially available as Garnet Toner #2), an azo dye derived from 2-amino-5-chloro-p-toluenesulphonic acid and 3-hydroxy-2-naphthoic acid. (CI 15860).

Bromocresol Green, also known as 3', 3", 5', 5"-tetrabromo-m-cresolsulphonphthalein.

Solvent Red 24, (commercially available as Atlasol Red 4B) an azo dye derived from 4-O-tolylazo-o-toluidine and 2-naphthol (CI 26105).

Pigment Yellow 5 (also known as Lithol Fast Yellow Y) an azo dye derived from o-nitroaniline and acetoacetanilide. (CI 11660).

Basic Violet 14, also known as Basic Fuchsine, and derived from aniline and toluidine. (CI 42510).

Pigment Orange 2 (commercially available as Ozark Orange X-1481) an azo dye derived from o-nitroaniline and 2-naphthol. (CI 12060).

The flux composition was coated onto a solder perform which was then positioned within a heat-shrinkable sleeve made from cross-linked polyvinylidene fluoride. A solderable substrate, specifically an insulated wire with insulation removed from a segment, was inserted into the sleeve so that the uninsulated segment was positioned inside the sleeve. The sleeve was then heated causing the sleeve to shrink down onto the wire. The initial colour of the flux composition, the temperature at which the flux composition changed colour and the final colour of the flux are recorded in Table 1.

## TABLE 1: Temperature indicating flux compositions

| Example | Dye | | Additive | | Initial colour | Final colour | Temp. of Colour Change |
|---|---|---|---|---|---|---|---|
| | Dye | Conc. | Additive | Conc. | | | |
| 1 | Acid Red 73 | 0.5% | Water | 10% | purple-maroon | colourless | 220°C |
| 2 | Pigment Red 3 | 0.5% | — | — | orange-red | light orange | 250°C |
| 3 | Pigment Red 3 | 1.0% | — | — | orange-red | light orange | 250°C |
| 4 | Thymol Blue | 1.0% | maleic acid | 3% | dark purple | colourless | 220°C |
| 5 | Thymol Blue | 0.5% | tartaric acid | 3% | dark purple | colourless | 220°C |
| 6 | Thymol Blue | 1.0% | citric acid | 6% | dark purple | colourless | 220°C |
| 7 | Pigment Red 52 | 1.5% | — | — | pink-purple | colourless | 220°C |
| 8 | Pigment Red 52 | 2.0% | — | — | pink-purple | colourless | 220°C |
| 9 | Pigment 52 | 3.0% | — | — | pink-purple | colourless | 220°C |
| 10 | Bromocresol Green | 1.0% | — | — | green | colourless | 250°C |
| 11 | Solvent Red 24 | 0.5% | — | — | red | colourless | 300°C |
| 12 | Basic Fuchsine | 0.5% | — | — | purple-red | yellowish | 260°C |
| 13 | Basic Fuchsine | 0.5% | maleic acid | 3% | purple-red | colourless | 240—245°C |
| 14 | Pigment Orange 2 | 1.5% | — | — | orange | light yellow | 240°C |

The use of the temperature indicating solder flux composition of this invention has been described above with reference to its use in a soldering device of the heat-recoverable sleeve-type. The novel temperature indicating flux composition can be used in other soldering methods, for example, hand soldering. The temperature indicating flux can be applied in the same manner as flux as usually applied in the particular soldering method, and will change colour at the critial temperature. The flux can be coated onto a solder preform or incorporated into the solder. It is also possible to apply the flux to the substrate(s) to be soldered.

**Claims**

1. A soldering device comprising: a substantially transparent heat-recoverable polymeric member (3); a fusible solder insert (4) positioned within said member; and a solder flux composition which is associated with said solder insert (4), characterised in that the flux composition undergoes a visible colour change at a critical temperature.

2. A device in accordance with Claim 1, wherein said polymeric member (3) comprises a sleeve of crosslinked polymeric material.

3. A device in accordance with Claim 1 or 2, wherein said solder insert (4) is in the form of a ring on the inner surface of said polymeric member (3).

4. A device in accordance with any preceding claim, wherein said flux composition is coated on the surface of said solder insert.

5. A device in accordance with any preceding claim, wherein said flux composition comprises a rosin-based flux.

6. A device in accordance with any preceding claim, wherein said flux composition contains an azo dye derived from p-phenoxyazoaniline and 2-naphthol-6,8-disulphonic acid or an azo dye derived from 2-nitro-p-toluidine and 2-naphthol, or an azo dye derived from 2-amino-5-chloro-p-toluenesulphonic acid and 3-hydroxy-2-naphthoic acid, or an azo dye derived from 4-O-tolylazo-o-toluidine and 2-naphthol, or an azo dye derived from o-nitroariline and acetoacetanilide, or an azo dye derived from o-nitroaniline and 2-naphthol.

7. A device in accordance with any preceding claim, wherein the flux composition comprises solder flux and a chemically reactive component, said flux composition undergoing a chemical reaction resulting in a visible colour change at a critical temperature.

8. A device in accordance with Claim 7, wherein said flux undergoes a change in colour due to chemical reaction between said flux and said reactive component at said critical temperature.

9. A device in accordance with Claim 7 or 8, wherein said solder flux comprises a rosin-based solder flux.

10. A device in accordance with any one of Claims 7 to 9, wherein said flux undergoes a change in colour from a coloured state to a substantially colourless state.

11. A device in accordance with any one of Claims 7 to 10, wherein said chemically reactive component comprises thymol-sulphonphthalein, or 3',3'',5',5'' - tetrabromo - m - cresolsulphonphthalein, or an azo dye derived from aniline and toluidine.

12. A device in accordance with any preceding claim wherein said solder flux undergoes a change in colour at a temperature in the range of from about 150°C to about 450°C, preferably in the range of from about 200°C to about 240°C.

13. A device in accordance with any preceding claim wherein said solder flux undergoes a colour change from a coloured state to a substantially colourless state.

14. A device in accordance with any preceding claim, wherein the colour change in the solder flux composition is irreversible.

15. A method of soldering at least two solderable, preferably elongate substrates (1) and (2) which comprises: positioning said substrates (1) and (2) within a heat-recoverable soldering device according to any one of the preceding claims, heating said heat-recoverable member (3) to recover into contact with said substrates (1) and (2), and causing the solder to melt and flow and solder the substrates together, characterised in that heating the heat-recoverable member (3) also causes said flux to undergo a visible colour change.

16. A method according to Claim 15, wherein said device is arranged such that the step of heating causes the heat-recoverable member (3) to recover into contact with said substrates (1) and (2) before the flux undergoes a visible colour change.

**Patentansprüche**

1. Lötvorrichtung, enthaltend: ein im wesentlichen transparentes in der Wärme rückstellbares polymeres Teil (3); eine schmelzbare Lotmitteleinlage (4), die in dem Teil angeordnet ist; und eine Flußmittelzusammensetzung für das Lömittel, die zusammen mit der Lötmitteleinlage (4) vorliegt, dadurch gekennzeichnet daß Flußmittelzusammensetzung eine sichtbare Farbänderung bein einer kritischen Temperatur eingeht.

2. Vorrichtung nach Anspruch 1, bei der das polymere Teil (3) eine Hülse aus vernetztem polymerem Material umfasst.

3. Vorrichtung nach Anspruch 1 order 2, in der die Lötmitteleinlage (4) in der Form eines Ringes an der inneren Oberfläche des polymeren Teils (3) vorliegt.

4. Vorrichtung nach einem der vorhergehenden Ansprüche, bei der die Flußmittelzusammensetzung auf die Oberfläche der Lötmitteleinlage aufgetragen ist.

5. Vorrichtung nach einem der vorhergehenden Ansprüche, bei der die Flußmittelzusammensetzung ein Flußmittel auf Kolophoniumbasis umfasst.

6. Vorrichtung nach einem der vorhergehenden Ansprüche, in der die Flußmittelzusammensetzung einen Azofarbstoff enthält, der von p-Phenoxyazoanilin und 2-Naphthol-6,8-disulfonsäure stammt, oder einen Azofarbstoff, der von 2-Nitro-p-toluidin und 2-Naphthol stammt, oder einen Azofarbstoff, der von 2-Amino-5-chlor-p-toluolsulfonsäure und 3-Hydroxy-2-naphthoesäure stammt, oder einen Azofarbstoff, der von 4-O-Tolyazo-o-toluidin und 2-Naphthol stammt, oder einen Azofarbstoff, der von o-Nitroanilin und Acetoacetanilid stammt, oder einen Azofarbstoff, der von o-Nitroanilin und 2-Naphthol stammt.

7. Vorrichtung nach einem der vorhergehenden Ansprüche, in der die Flu—mittelzusammensetzung Flußmittel für das Lötmittel und eine chemisch reaktive Komponente umfasst, wobei die Flußmittelzusammensetzung eine chemische Reaktion eingeht, die zu einer sichtbaren Farbänderung bei einer kritischen Temperatur führt.

8. Vorrichtung nach Anspruch 7, in der das Flußmittel eine Farbänderung durch chemische Reaktion zwischen dem Flußmittel und der reaktiven Komponente bei der kritischen Temperatur eingeht.

9. Vorrichtung nach Anspruch 7 oder 8, bei der das Flußmittel für das Lötmittel ein Flußmittel auf Kolophoniumbasis für Lötmittel umfasst.

10. Vorrichtung nach einem der Ansprüche 7 bis 9, bei der das Flußmittel eine Farbänderung von einem gefärbten Zustand zu einem im wesentlichen farblosen Zustand eingeht.

11. Vorrichtung nach einem der Ansprüche 7 bis 10, bei der die chemisch reaktionsfähige Komponente Thymol-sulfonphthalein ofer 3', 3", 5', 5"-Tetrabrom-m-kresolsulfonphthalein oder einen Azofarbstoff, der von Anilin und Toluidin stammt, umfasst.

12. Vorrichtung nach einem der vorhergehenden Ansprüche, bei der das Flußmittel für das Lötmittel eine Farbänderung bein einer Temperatur im Bereich von etwa 150°C bis etwa 450°C, vorzugsweise im Bereich von etwa 200°C bis etwa 240°C eingeht.

13. Vorrichtung nach einem der vorhergehenden Ansprüche, bei der das Flußmittel für das Lötmittel eine Farbänderung von einem gefärbten Zustand zu einem im wesentlichen farblosen Zustand eingeht.

14. Vorrichtung nach einem der vorhergehenden Ansprüche, bei der die Farbänderung in der Flußmittelzusammensetzung für das Lötmittel irreversibel ist.

15. Verfahrem zum Löten von mindestens zwei lötbaren, vorzugsweise langen Substraten (1) und (2), das umfasst: Einlegen der Substrate (1) und (2) in eine in der Wärme rückstellbare Lötvorrichtung gemäß einem der vorhergehenden Ansprüche, Erwärmen des in der Wärme rückstellbaren Teils (3) zur Rückstellung in Kontakt mit den Substraten (1) und (2), und Schmelzen und Fließen lassen des Lötmittels, und Verlöten der Substrate miteinander, dadurch gekennzeichnet, daß das Erwärmen des in der Wärme rückstellbaren Teils (3) auch dazu führt, daß das Flußmittel eine sichtbare Farbänderung eingeht.

16. Verfahren nach Anspruch 15, bei dem die Vorrichtung so angeordnet ist, daß die Erwärmungsstufe zu einer Rückstellung des in der Wärme rückstellbaren Teils (3) in Kontakt mit den Substraten (1) und (2) führt, bevor das Flußmittel eine sichtbare Farbänderung eingeht.

**Revendications**

1. Dispositif de brasage comprenant: un élément polymère pouvant récupérer sa forme à chaud, pratiquement transparent (3); une brasure fusible insérée (4) positionnée à l'intérieur dudit élément; et une composition de fondant de brasage qui est associée à ladite brasure insérée (4), caractérisé par le fait que la composition de fondant subit un changement de couleur visible à une température critique.

2. Dispositif selon la revendication 1, dans lequel ledit élément polymère (3) comprend un manchon de matériau polymère réticulé.

3. Dispositif selon la revendication 1 ou 2, dans lequel ladite brasure insérée (4) se trouve sous la forme d'un anneau sur la face interne dudit élément polymère (3).

4. Dispositif selon l'une quelconque des revendications précédentes, dans lequel ladite composition de fondant est appliquée à la surface de ladite brasure insérée.

5. Dispositif selon l'une quelconque des revendications précédentes, dans lequel ladite composition de fondant comprend un fondant à base de colophane.

6. Dispositif selon l'une quelconque des revendications précédentes, dans lequel ladite composition de fondant contient un colorant azoïque dérivé de la p-phénoxy-azoaniline et de l'acide 2-naphtol-6,8-disulfonique ou un colorant azoïque dérivé de la 2-nitro-p-toluidine et du 2-naphtol, ou un colorant azoïque dérivé de l'acide 2-amino-5-chloro-p-toluènesulfonique et de l'acide 3-hydroxy-2-naphtoïque, ou un colorant azoïque dérivé de la 4-O-tolyazo-o-toluidine et du 2-naphtol, ou un colorant azoïque dérivé de la o-nitroaniline et de l'acétoacétanilide, ou un colorant azoïque dérivé de la o-nitro-aniline et du 2-naphtol.

7. Dispositif selon l'une quelconque des revendications précédentes, dans lequel la composition de fondant comprend le fondant de brasage et un composant chimiquement réactif, ladite composition de fondant subissant une réaction chimique ayant pour résultat un changement visible de couleur à une température critique.

8. Dispositif selon la revendication 7, dans lequel ledit fondant subit un changement de couleur dû à une réaction chimique entre ledit fondant et ledit composant réactif à ladite température critique.

9. Dispositif selon la revendication 7 ou 8, dans lequel ledit fondant de brasage comprend un fondant de brasage à base de colophane.

10. Dispositif selon l'une quelconque des revendications 7 à 9, dans lequel ledit fondant subit un changement de couleur d'un état coloré à un état pratiquement incolore.

11. Dispositif selon l'une quelconque des revendications 7 à 10, dans lequel ledit composant chimiquement réactif comprend de la thymolsulfonephtaléine, ou de la 3', 3", 5', 5"-tétrabromo-m-crésolsufonephtaléine, ou un colorant azoïque dérivé de l'aniline et de la toluidine.

12. Dispositif selon l'une quelconque des revendications précédentes, dans lequel ledit fondant de brasage subit un changement de couleur à une température dans l'intervalle allant d'environ 150°C à environ 450°C, préférablement dans l'intervalle allant d'environ 200°C à environ 240°C.

13. Dispositif selon l'une quelconque des revendications précédentes, dans lequel ledit fondant de brasage subit un changement de couleur d'un état coloré à un état pratiquement incolore.

14. Dispositif selon l'une quelconque des revendications précédentes, dans lequel le changement de couleur dans la composition de fondant de brasage est irréversible.

15. Procédé de brasage d'au moins deux substrats pouvant être brasés (1) et (2), préférablement allongés, qui comprend: le positionnement desdits substrats (1) et (2) à l'intérieur d'un dispositif de brasage pouvant récupérer sa forme à chaud selon l'une quelconque des revendications précedentes, le chauffage dudit élément pouvant récupérer sa forme à chaud (3) pour qu'il récupère sa forme em entrant en contact avec lesdits substrats (1) et (2) et en faisant que la brasure fond et s'écoule et brase ensemble les substrats, caractérisé par le fait que le chauffage de l'élément pouvant récupérer sa forme à chaud (3) fait aussi que ledit fondant subit un changement de couleur visible.

16. Procédé selon la revendication 15, dans lequel ledit dispositif est ordonné de telle manière que le stade de chauffage fait que l'élément pouvant récupérer sa forme à chaud (3) récupère sa forme en entrant en contact avec lesdits substrats (1) et (2) avant que le fondant subisse un changement de couleure visible.

## Fig.1.

## Fig.2.